# EUROPÄISCHE PATENTANMELDUNG

(11) **EP 2 209 189 A2**
(43) Veröffentlichungstag der Anmeldung: **21.07.2010**
(21) Anmeldenummer: 09177453.9
(22) Anmeldetag: 30.11.2009
(51) Int. Cl.: H02K 13/00

(54) **Elektromotor**

(30) Priorität: 19.12.2008 DE 102008054960
(71) Anmelder: HILTI Aktiengesellschaft, 9494 Schaan (LI)
(72) Erfinder: Fritsch, Frank, 86916, Kaufering (DE); Jakob, Manfred, 86916, Kaufering (DE)

(57) **Zusammenfassung**

Der erfindungsgemässe Elektromotor beinhaltet einen Kommutator (5), wenigstens zwei Bürsten (10, 20, 30, 40, 50), die einen leitfähigen Abschnitt (11) aufweisen, und zwei Federn (16), die die leitfähigen Abschnitte (11) der Bürsten (10, 20, 30, 40, 50) an den Kommutator (5) anpressen. Die Massen der ersten und zweiten Bürste sind verschieden.

## Beschreibung

Die vorliegende Erfindung betrifft einen Elektromotor.

Ein Rotor für einen Universalmotor weist mehrere Wicklungen auf, durch die im Betrieb elektrischer Strom fliesst. Die Einspeisung des elektrischen Stroms in die Wicklungen erfolgt über einen ringförmigen Kommutator, der sich zusammen mit dem Rotor dreht. An dem Kommutator werden elektrisch leitfähige, federnd gelagerte Bürsten angepresst. Die Bürsten folgen den Unebenheiten des Umfangs des Kommutators. Die Bürsten sind mit einer Stromquelle elektrisch verbunden.

Eine Anordnung entsprechender Bürsten ist aus FR 1.424.683 bekannt. Auf eine dem Kommutator abgewandete Fläche der Bürste drückt eine Feder. Zwischen der Feder und der Bürste ist eine elastische Schicht aus Silikon auf der abgewandten Fläche vorgesehen, welche ein verbessertes Folgen der Bürste auf dem Kommutator bewirken soll.

Bei manchen Drehzahlen des Kommutators kann die federnd gelagerte Bürste resonant angeregt werden. Synchron zu der Drehung des Kommutators ändert sich periodisch der Anpressdruck der Kohlen auf den Kommutator. Hierdurch kann sich eine ungleiche Abnutzung über den Umfang des Kommutators ergeben, welche die resonante Anregung verstärkt. Eine Resonanzkatastrophe kann zu einer Beschädigung des Kommutators führen.

Eine Aufgabe besteht darin einen Elektromotor mit langer Verwendungsdauer seiner Bürsten und/oder seines Kommutators bereitzustellen.

Der erfindungsgemässe Elektromotor beinhaltet einen Kommutator, wenigstens zwei Bürsten mit einem leitfähigen Abschnitt und zwei Federn, die den leitfähigen Abschnitt der Bürsten an den Kommutator anpressen. Eine erste der Bürsten weist eine erste Masse und eine zweite der Bürsten eine zweite Masse auf und die erste und zweite Masse sind verschieden.
Sofern eine der Bürsten in eine resonante Anregung versetzt wird, kann die andere in einem ruhigen Betrieb bleiben oder wird mit einer anderen Eigenfrequenz angeregt. Eine periodische Belastung des Kommutators aufgrund der zweier synchron und resonant angeregter Bürsten tritt nicht auf. Das unterschiedliche Verhalten der beiden Bürsten begünstigt eine gleichmässige Belastung des Kommutators. Die Abnutzung des Kommutators ist weitgehend uniform. Es bildet sich daher kein periodisch modulierter Umfang des Kommutators aus, der die resonante Anregung verstärken könnte.

In den Unteransprüchen sind Ausgestaltungen der Bohrvorrichtung und des Bohrverfahrens angegeben.

Eine Ausgestaltung sieht vor, dass die Bürste einen Masseblock aufweist, der über den elastischen Dämpfer mit dem leitfähigen Abschnitt verbunden ist. Es wurde erkannt, dass die Eigenfrequenz im Wesentlichen von den Elastizitätsmodulen der Bürste und der Oberfläche des Kommutators abzuhängen scheint. Die Federkonstante der Feder hat vermutlich nur einen geringen Einfluss. Als zweite Grösse beeinflusst die Masse der Bürste das resonante Verhalten. Ein Aspekt besteht darin, dass der Masseblock nicht abgenutzt wird. Hierdurch kann eine minimale Masse vorgegeben werden, die während des Betriebs nicht unterschritten wird. Mit einer geeigneten Wahl der Masse des Massenblocks in Abhängigkeit der gewünschten Drehzahlbereiche, der elastischen Eigenschaften der Bürste und des Kommutators kann somit eine den Kommutator beschädigende Resonanzkatastrophe vermieden werden.

Eine Ausgestaltung sieht vor, dass wenigstens eine der Bürsten einen Masseblock aufweist, der aus einem anderen Material als der leitfähige Abschnitt gebildet ist Das andere Material kann elektrisch isolierend sein.

In einer Ausgestaltung beträgt der Anteil des Masseblocks an der Masse der Bürste wenigstens ein Fünftel. Die Masse wird auf die unverbrauchte Bürste bezogen. Über die Dauer des Betriebs wird die Bürste soweit abgenutzt wird, dass nur noch der Masseblock wesentlich zu der Masse der Bürste beiträgt. Dabei wird eine maximale Verschiebung der Resonanzfrequenzen etwa um einen Faktor zwei erwartet.

In einer Ausgestaltung weist der erste Masseblock der ersten Bürste eine um wenigstens zehn Prozent geringere Masse auf als der zweite Masseblock der zweiten Bürste. Die Masse der Bürsten kann sich beispielsweise um wenigstens zwanzig, beispielsweise fünfundzwanzig Prozent unterscheiden. Ein Unterschied kann maximal 50 Prozent betragen.

In einer Ausgestaltung besteht der Dämpfer aus einem elastischen, elektrisch isolierenden Material. Sobald der leitfähige Abschnitt der Bürste aufgebraucht ist, wird vorteilhafterweise automatisch die Stromzufuhr unterbrochen. Eine Beschädigung des Kommutators wird automatisch vermieden.

Eine Ausgestaltung sieht vor, dass der Dämpfer einer ersten der Bürsten eine erste Federkonstante aufweist, der Dämpfer einer zweiten der Bürsten eine zweite Federkonstante aufweist und die erste Federkonstante wenigstens zehn Prozent grösser als die zweite Federkonstante ist. Eine Beeinflussung der Resonanzfrequenz, wenn auch in geringerem Umfang kann auch über die Dämpfer erreicht werden. Die unterschiedlichen Federkonstanten koppeln die jeweiligen Masseblöcke verschieden an. Die verschiedenen Federkonstanten können durch unterschiedliche Materialien mit unterschiedlichen elastischen Modi und/oder verschiedene Geometrien, z.B. Querschnitt, Dicke, erreicht werden.

Die Ausgestaltungen des Elektromotors können drei oder mehr Bürsten aufweisen. Diese können sich paarweise unterscheiden oder Gruppen mit verschiedenen Eigenschaften bilden.

Die nachfolgende Beschreibung erläutert die Erfindung anhand von exemplarischen Ausführungsformen und Figuren. In den Figuren zeigen:
Fig. 1 zeigt einen Teilquerschnitt eines Elektromotors;
Fig. 2 zeigt einen Teilquerschnitt einer Bürste;
Fig. 3 zeigt einen Teilquerschnitt einer weiteren Bürste und
Fig. 4 zeigt einen Teilquerschnitt eines weiteren Elektromotors.

Gleiche oder funktionsgleiche Elemente werden durch gleiche Bezugszeichen in den Figuren indiziert, soweit nicht anders angegeben.

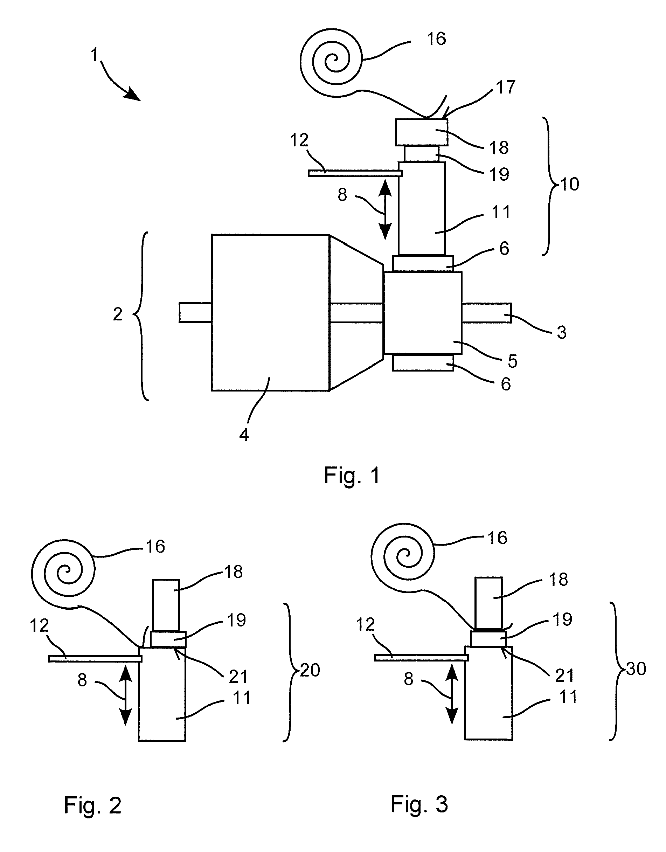

Fig. 1 zeigt einen schematischen Teilschnitt eines Elektromotors 1 mit einem Rotor 2. Der Rotor 2 beinhaltet eine Welle 3, mehrere Anker 4 und einen Kommutator 5. Ein den Rotor 2 umgebender Stator ist nicht dargestellt.

Die Anker 3 tragen mehrere von einander isolierte Wicklungen eines oder mehrerer Drähte. Während des Betriebs des Elektromotors durchläuft ein Strom alternierend zumindest eine der Wicklungen.

Der Kommutator 5 weist mehrere von einander isolierte, elektrisch leitfähige Flächen 6 entlang seinem Umfang auf. Die leitenden Flächen 6 sind wenigstens mit jeweils einer der Wicklungen elektrisch verbunden. Die zugehörigen Leitungen können nahe der Welle 3 geführt werden (nicht dargestellt). Der Kommutator 5 wird während des Betriebs des Elektromotors 1 von der Welle 3 mitgedreht.

Eine Einspeisung des elektrischen Stroms in die leitenden Flächen 6 des Kommutators 5 erfolgt über Kontaktbürsten 10 (nachfolgend als Bürsten bezeichnet).

Die Bürsten 10 weisen einen leitfähigen Abschnitt 11 auf. Der leitfähige Abschnitt 11 ist vorzugsweise aus Graphit hergestellt. Alternativ kann der leitfähige Abschnitt 11 auch aus dünnen Metalllamellen, Drähten etc. bestehen. Der leitfähige Abschnitt 11 ist über eine elektrische Leitung 12 ankontaktiert.

Der leitfähige Abschnitt 11 wird in mechanischen Kontakt mit dem Kommutator 5 gehalten. Hierzu dient eine Feder 16, die eine entsprechende Kraft auf die Rückseite 17 der Bürste 10 ausübt. Die Rückseite 17 der Bürste 10 ist von dem Kommutator 5 abgewandt. Die Feder 16 ist beispielhaft als Spiralfeder dargestellt, andere Federformen, z.B. Blattfeder, Schraubenfeder, sind ebenfalls geeignet.

In der dargestellten Ausführungsform wird die Rückseite 17 durch einen Masseblock 18 und einen elastischen Dämpfer 19 realisiert. Der elastische Dämpfer 19 ist dabei zwischen dem leitfähigen Abschnitt 11 der Bürste 10 und dem Masseblock 18 angeordnet.

Der elastische Dämpfer 19 kann aus einem weichen Polymer hergestellt sein, insbesondere eignen sich Silikone. Eine geringfügige translatorische Auslenkung 8 der Bürste 10 wird durch den elastischen Dämpfer 19 aufgefangen. Der Dämpfer 19 kann als dünnes Plättchen oder eine dünne angespritzte Schicht realisiert sein. Eine Dicke kann 0,5 mm bis 2 mm betragen.

Der Masseblock 18 erhöht die Masse der Bürste 10. Vorteilhaft erweist sich eine Erhöhung der Masse um wenigstens ein Viertel, d.h. der Masseblock 18 hat einen Anteil von wenigstens 20 % der Masse der Bürste 10.

Der Masseblock 18 kann aus einem beliebigen Material gebildet werden. Bevorzugt werden jedoch Metalle, die aufgrund ihres höheren spezifischen Gewichts eine kompakte Bauform ermöglichen. Alternativ dient ein Kunststoffkörper als Masseblock 18. Der Kunststoffkörper kann an den leitfähigen Abschnitt 11 angespritzt werden.

Die elektrische Leitung 12 kann eine einfache Litze, ein Draht sein, der an den leitfähigen Abschnitt 11 angeklemmt, angeschweisst, angelötet oder sonstiger Weise befestigt ist. Die elektrische Leitung 12 weist eine ausreichende Flexibilität auf, um die geringfügige translatorische Bewegung 8 der Bürste 10 senkrecht zur Welle 3 nachzuvollziehen.

Die Feder 16 übt eine Kraft auf die Bürste 10 aus, die wenigstens dem zehnfachen und höchstens dem 100-fachen des Gewichts der Bürste 10 entspricht, z.B. wenigstens zwanzigfachen, höchstens 50-fachen.

Fig. 2 zeigt schematisch einen anderen Aufbau der Bürste 20. Die Feder 16 drückt unmittelbar auf den leitfähigen Abschnitt 11 der Bürste 20. Der leitfähige Abschnitt 11 weist eine teilweise freiliegende Fläche 21 auf, die von dem Kommutator 5 abgewandt ist. Die Feder 16 berührt diese freiliegende Fläche 21.

Der elastische Dämpfer 11 liegt teilweise an dem leitfähigen Abschnitt 11 an. Der Masseblock 18 ist durch den elastischen Dämpfer 11 mit dem leitfähigen Abschnitt 11 mittelbar mechanisch gekoppelt.

In der dargestellten Ausführungsform (Fig. 2) ist der elastische Dämpfer 19 ebenfalls auf der dem Kommutator 5 abgewandten Fläche 21 angeordnet. Alternativ könnte der Dämpfer 19 an einer Seitenfläche 22 angespritzt werden. Der Masseblock 18 kann seitlich an dem Dämpfer befestigt werden, derart dass der Dämpfer 19 zwischenliegend zwischen leitfähigem Abschnitt 11 und Masseblock 18 angeordnet ist.

Eine weitere Variante einer Bürste 30 ist in Fig. 3 gezeigt. Ein Endstück der Feder 16 drückt auf den elastischen Dämpfer 11. Auf dem Endstück ist der Masseblock 18 angeordnet. Ein Kraftfluss von dem Masseblock 18 zu dem Kommutator 5 durchläuft in der Reihenfolge nacheinander das Endstück der Feder 16, den elastischen Dämpfer 11 und den leitfähigen Abschnitt 11 der Bürste 30.

Die Bürste 10, 20, 30 wird mit zwei unterschiedlichen Systemen bedämpft. Die Feder 16 mit einer gegenüber dem Dämpfer 19 vergleichsweise hohen Federkonstante ist mit einer sehr grossen Masse, z.B. dem Gehäuse des Motors, gekoppelt. Dieses System regiert auf niedere Frequenzen. Der freischwingende Masseblock 18, der über den Dämpfer 19 wirkt höher frequenten Bewegungen entgegen.

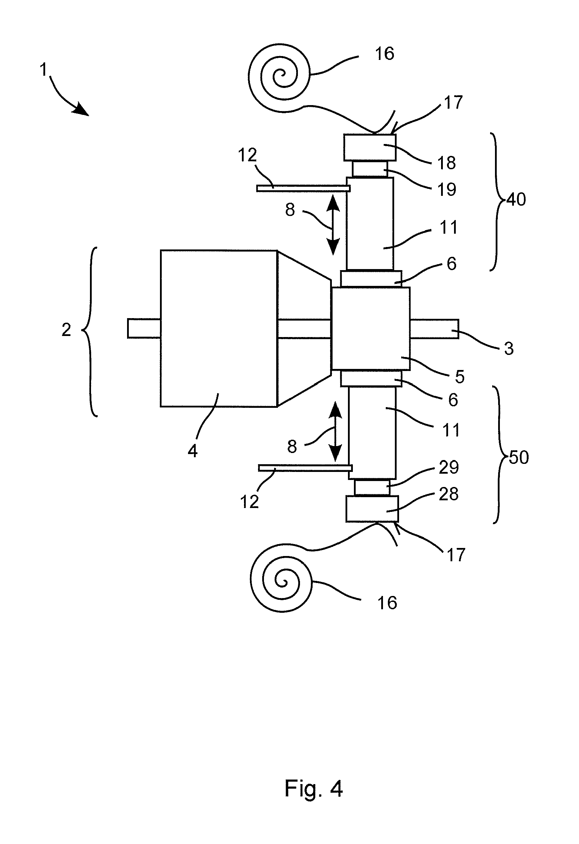

Eine weitere Ausgestaltung des Elektromotors 1 ist in Fig. 4 dargestellt. Beispielhaft weist der Motor zwei Bürsten 40, 50 auf. Die Bürsten 40, 50 können nach einer beliebigen der vorherigen Ausführungsformen ausgebildet sein. Die beiden Bürsten 40, 50 drücken beide auf den Kommutator 5 und dessen leitfähige Flächen 6.

Die beiden Bürsten 40, 50 sind mit verschiedenen Masseblöcken 18, 28 ausgebildet. Vorzugsweise ist die Masse des einen Masseblocks 18 um wenigstens 10 % geringer als die Masse des zweiten Masseblocks 28 und höchstens 50 % geringer als die des zweite Massenblocks 28. Die Eigenresonanzen der beiden Bürsten 40, 50 sind in Folge verschieden. Eine gemeinsame resonante Anregung tritt nicht auf.

Alternativ oder zusätzlich können die beiden Dämpfer 19, 29 verschieden ausgebildet sein. Deren Federkonstante kann durch eine andersartige Geometrie oder eine Wahl unterschiedlicher Materialien beeinflusst werden. Die Eigenresonanzen der beiden Bürsten 40, 50 können hierdurch zueinander verschoben werden.

## Patentansprüche

1. Elektromotor mit:
einem Kommutator (5),
wenigstens zwei Bürsten (10, 20, 30, 40, 50) mit einem leitfähigen Abschnitt (11) und wenigstens zwei Federn (16), die jeweils den leitfähigen Abschnitt (11) der Bürsten (10, 20, 30, 40, 50) an den Kommutator (5) anpressen"
**dadurch gekennzeichnet, dass**
eine erste der Bürsten (10, 20, 30, 40, 50) eine erste Masse aufweist und eine zweite der Bürsten (10, 20, 30, 40, 50) eine zweite Masse aufweist und die erste und zweite Masse verschieden sind.

2. Elektromotor nach Anspruch 1, wobei wenigstens eine der Bürsten (10, 20, 30, 40, 50) einen Masseblock (18, 28) aufweist, der über einen elastischen Dämpfer (19, 29) mit dem leitfähigen Abschnitt (11) verbunden ist.

3. Elektromotor nach Anspruch 1, wobei wenigstens eine der Bürsten (10, 20, 30, 40, 50) einen Masseblock (18; 28) aufweist, der aus einem anderen Material als der leitfähige Abschnitt gebildet ist.

4. Elektromotor nach einem der vorhergehenden Ansprüche, wobei der Anteil des Masseblocks (18, 28) an der Masse der Bürste (10, 20, 30, 40, 50) wenigstens ein Fünftel beträgt.

5. Elektromotor nach einem der vorhergehenden Ansprüche, wobei der erste Masseblock (18, 28) der ersten Bürste (10, 20, 30, 40, 50) eine um wenigstens zehn Prozent geringere Masse aufweist als der zweite Masseblock (18, 28) der zweiten Bürste (10, 20, 30, 40, 50).

6. Elektromotor nach einem der vorherigen Ansprüche 2 bis 5, wobei der Dämpfer (19, 29) aus einem elastischen, elektrisch isolierendem Material besteht.

7. Elektromotor nach einem der vorhergehenden Ansprüche 2 bis 5, wobei der Dämpfer (19, 29) der ersten der Bürsten (10, 20, 30, 40, 50) eine erste Federkonstante aufweist, der Dämpfer (19, 29) der zweiten der Bürsten (10, 20, 30, 40, 50) eine zweite Federkonstante aufweist und die erste Federkonstante wenigstens zehn Prozent grösser als die zweite Federkonstante ist.

8. Elektromotor nach Anspruch 7, wobei das elastische Modul des Dämpfers (19, 29) der ersten Bürste (10, 20, 30, 40, 50) von dem elastischen Modul des Dämpfers (19, 29) der zweiten Bürste (10, 20, 30, 40, 50) verschieden ist.

9. Elektromotor nach Anspruch 7 oder 8, wobei der Dämpfer (19, 29) der ersten Bürste (10, 20, 30, 40, 50) ein erstes Verhältnis von Dicke zu Querschnittsfläche aufweist, der Dämpfer (19, 29) der zweiten Bürste (10, 20, 30, 40, 50) ein zweites Verhältnis von Dicke zu Querschnittsfläche aufweist und das erste und zweite Verhältnis verschieden sind.
